# EUROPEAN PATENT SPECIFICATION

(11) **EP 0 455 697 B1**
(45) Date of publication and mention of the grant of the patent: **23.03.1994**
(21) Application number: 90902416.8
(22) Date of filing: 09.01.1990
(51) Int. Cl.: B02C 18/40, B02C 23/08, B07B 13/04

(54) **MACHINE FOR PROCESSING GOODS, ESPECIALLY REFUSE, FOR SORTING IT**
ANLAGE ZUR VERARBEITUNG VON GÜTERN, INSBESONDERE VON ABFÄLLEN ZWECKS DEREN SICHTUNG
MACHINE DE TRAITEMENT DE MARCHANDISES, EN PARTICULIER DE DECHETS, EN VUE DE LEUR TRIAGE

(30) Priority: 24.01.1989 SE 8900240
(43) Date of publication of application: 13.11.1991
(73) Proprietor: WROBLEWSKI, Franz Bruno, S-826 00 Söderhamn (SE)
(72) Inventor: WROBLEWSKI, Franz Bruno, S-826 00 Söderhamn (SE)
(74) Representative: Wiklund, Erik
(86) International application number: SE9000013
(87) International publication number: WO9008597

(56) References cited:
- US-A- 4 693 287

## Description

### Technical field of the invention

This invention relates to a machine for processing goods, especially refuse, with a view to sorting said goods, comprising at least one rotatable horizontal drum having two or more processing stations provided in succession between an inlet and an outlet at opposite ends of said drum, each of said processing stations comprising one or suitably more rotatable shafts or shaft-like elements whose circumferential surfaces are equipped with projecting goods-processing means and which are mounted at openings in the drum wall, more specifically with the centre axes of the shafts located outside the drum and with said processing means projecting into the drum through said openings, said processing means being adapted to cooperate with the edge portions of the drum wall defining said openings, for exerting a cutting, shearing or clipping action on goods fed through the drum from said inlet towards said outlet, for instance by said processing means.

### State of the art

A machine of the design generally described above is previously known from SE-A-8405744 (and corresponding WO-A-8602874, CA-A-1,240,590, US-A-4,693,287 and NO-A-159067). This prior art machine is intended and constructed for bundle limbing of trees, that is limbing of whole trees fed in bundles through the machine drum.

### Brief description of the inventive concept

The present invention aims at developing the prior art machine to the extent that it can be efficiently used for sorting goods, such as refuse, preferably in the form of domestic waste. To this end, the machine according to the invention is characterised in that the processing means of the shafts, in a first station located closest to said inlet, have smaller dimensions than the corresponding processing means in the succeeding station or stations in order, in said first station, to remove fine goods while allowing coarser goods, during the feed of the goods from said inlet towards said outlet along the bottom of the drum, to pass on for removal in the succeeding station or stations.

### Brief description of the accompanying drawings

In the drawings,
- Fig. 1: is a longitudinal section of the inventive sorting machine,
- Fig. 2: is a top plan view of the machine shown in Fig. 1,
- Fig. 3: is an enlarged cross section when viewing to the left in Fig. 1,
- Fig. 4: is an enlarged detail view of a preferred embodiment of the invention and
- Fig. 5: is another enlarged detail view of the machine.

### Detailed description of a preferred embodiment of the invention

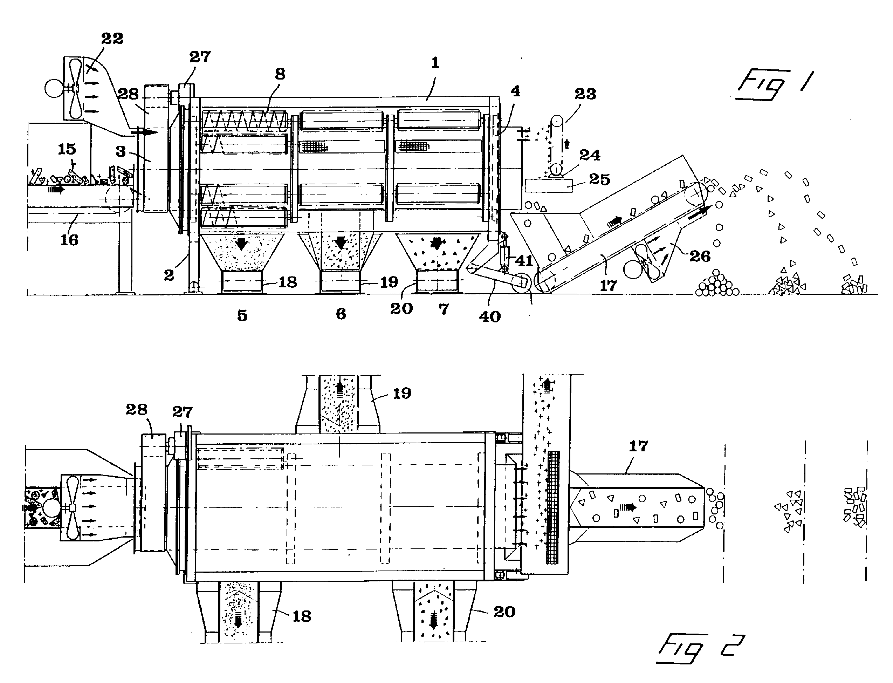

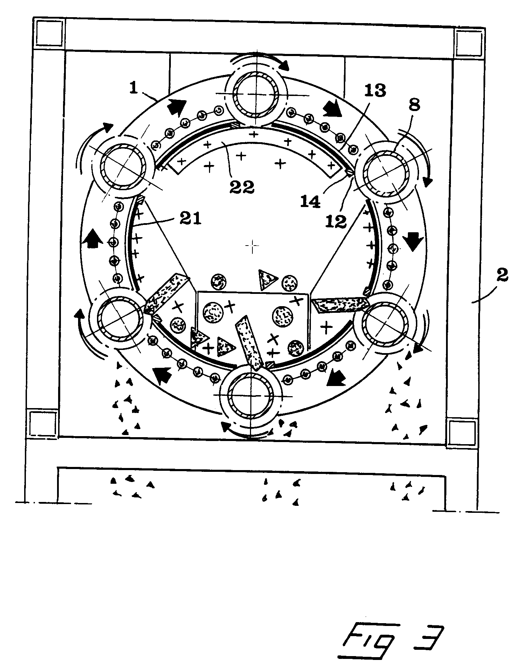

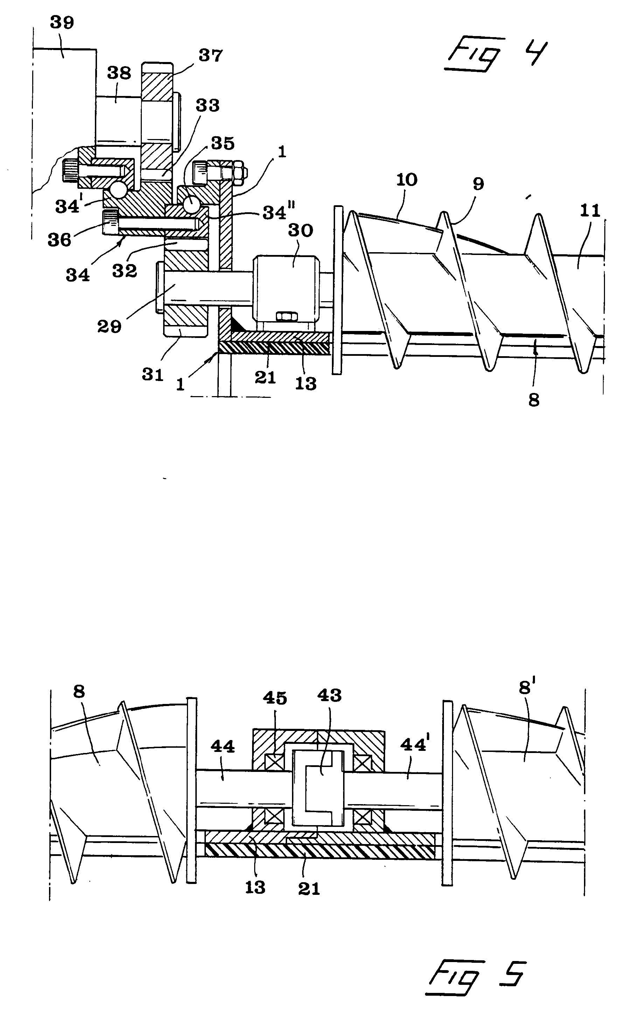

In Figs 1-3, a rotatable drum generally designated 1 is supported by a frame-like stand generally designated 2. The drum is open at its two opposite ends, forming an inlet 3 and an outlet 4 for the goods to be sorted. Between the inlet 3 and the outlet 4 there are provided three succeeding processing stations 5, 6, 7, each comprising a plurality of rotatable shafts or shaft-like elements 8 (see also Fig. 4) whose circumferential surfaces are equipped with projecting processing means 9, 10 which in the illustrated example consist in known manner of ridges or threads helically extending along the circumferential surface 11 of the shaft. As appears from Fig. 3, six shafts 8 are used in the preferred embodiment, the shafts suitably being equidistantly distributed along the circumference of the drum 1. Each shaft 8 is mounted in connection with a respective opening 12 in the drum wall 13, the processing means 9, 10 being adapted to cooperate with the edge portions of the drum wall defining said opening. Advantageously, at least one of the two opposite, elongate edge portions of the drum wall defining the opening 12 may be provided with a special wearing rail 14 located in the immediate vicinity of the crests of the threads 9, 10. In a manner known per se, the threads 9, 10 will process the goods entering the area between the threads and the wearing rail 14, more specifically in such a manner that the goods is subjected to a shearing, tearing and/or crushing action by the threads. As appears from Fig. 4, one thread 9 has a relatively small pitch along the circumferential surface 11 of the shaft 8 while the other thread 10 has a considerably greater pitch and extends in a direction contrary to that of the first-mentioned thread. Assuming that the thread 9 extends as a right-hand thread along the shaft, then the thread 10 extends as a left-hand thread therealong. In practice, the thread 9 thus principally serves to feed goods supplied into the drum, in the longitudinal direction thereof, while the thread 10 principally serves to shear or cut the goods to pieces against the edge or the rail 14.

For supplying goods 15 to be sorted into the drum 1, there is provided before the inlet 3 a first conveyor 16, such as a belt conveyor, and a second conveyor 17 is provided after the outlet 4 for taking care of goods having passed through the drum. At the three processing stations 5, 6, 7, there are additional conveyors 18, 19, 20 for taking care of goods sorted out at the respective stations. These conveyors, too, may suitably be in the form of belt conveyors which, as illustrated, extend at right angles to the longitudinal axis of the drum.

According to a preferred embodiment of the invention, the drum 1 is provided on its inside with a coating 21 (see Fig. 3) having electrostatic properties, which serves to attract to its surface components, e.g. plastic bags, from the goods fed through the drum, by the action of static electricity. In practice, this coating may consist of arcuate sheets of a suitable plastic, e.g. of the ROBALON type, covering the entire inside of the drum wall 13, with the exception of said openings 12. The unsorted goods 15 supplied into the drum will be located, by the force of gravity, on the bottom of the drum, forming a strand which is fed through the drum from the inlet towards the outlet. The components of the goods which are attracted by the coating 21 will however be entrained by the drum during its rotation and thus be moved to the top portion of the drum. At the top portion of the drum, more specifically in connection with the inlet 3, there is provided a fan generally designated 22 which serves, in the top portion of the drum, to produce an air stream which is directed towards the outlet 4 and removes the components accompanying the coating 21 to the top portion of the drum, for passing these components to a collecting device 23 disposed at the outlet 4. In practice, the collecting device 23 can be implemented in many different ways. In the illustrated example, however, it is assumed to consist of an endless net extending between spaced-apart rollers and continuously driven over these rollers. When the components discharged from the drum by the air stream produced by the fan 22 impinge on the front run of the net, they will adhere thereto and thereafter be scraped off from the net by means of a lower scraper device 24 so as to drop onto a side conveyor 25 for further conveyance to a suitable station. Thus, when sorting domestic waste it is possible primarily to take care of plastic bags or pieces of such bags in this manner and remove them by means of the conveyor 25.

As appears from Fig. 1, the conveyor 17 is arranged with a certain inclination relative to the supporting surface and is provided at its underside with a second fan 26. By the fan assembly 26, it is possible to classify into different fractions the components which drop onto the conveyor and which have different weight, more specifically such that the heavier components drop down in the immediate vicinity of the conveyor while gradually lighter components are blown away by the air stream produced by the fan, thus separating these components in successive fractions according to weight.

According to the inventive principle, the threads 9, 10 of the shafts 8 at the first station 5 nearest the inlet 3 are smaller than the corresponding threads of the shafts at the second and third processing stations 6, 7, respectively. Thus, in refuse sorting machines for domestic waste, the height of the threads at the first station 5 may be 8-12, preferably about 10 mm while the corresponding height of the threads at the second station 6 is 15-35, suitably 20-30 and preferably about 25 mm. The height of the threads of the shafts at the third and last station 7 may be in the range of 20-40, suitably 25-35 and preferably about 30 mm. Since the threads of the shafts at the first station 5 have a relatively small height, only relatively fine goods can enter the spaces between the threads of the shafts and the circumferential surface of the shaft, on the one hand, and the edge portions of the drum wall defining the openings for the shafts, on the other hand, coarser goods passing on through the drum by the feed action provided by the threads 9. When sorting domestic waste, goods, such as food scraps, flowers, coffee-grounds and the like, will be separated at the first station 5, while coarser components, such as cartons, bottles, aluminium cans and the like, will ride on the threads of the shafts without being seized thereby and thus be conveyed onto the next processing station 6. At this station, the threads have a sufficient height to be able to seize at least certain components, such as cartons and the like, but not a sufficient height for bottles and aluminium cans which because of their size will pass on through the drum to the outlet 4 and drop onto the conveyor 17 to be finally classified into different fractions as described above. Thus, heavier bottles will drop down immediately adjacent the conveyor 17 while lighter aluminium cans will be blown farther away by the air stream produced by the fan 26.

Although helical threads may advantageously be used as processing means on the shafts described, it is also conceivable to use other types of processing means with gradually increasing height at the succeeding stations. Thus, it is possible to equip the shafts with a plurality of separate studs or projections which may advantageously be helically distributed along the circumferential surfaces of the shafts so as to obtain the desired through-feed effect. In such a case, the separate projections may cooperate with toothed wearing rails or edge portions in connection with the shaft openings, such that the projections can pass through the gaps between the teeth of the wearing rails.

It should be pointed out that the drum 1 may advantageously be provided at its inlet end 3 with one or more knives serving to cut up bags of paper and/or plastic, of the type conventionally used for domestic waste.

For rotating the drum 1, there is provided a motor or power source 27 (Figs 1 and 2) fixedly mounted on the stand 2 and connected to the drum through a suitable transmission, e.g. a V-belt transmission accommodated in a housing 28. From Fig. 4 appears that the different shafts 8 are automatically drivable by the rotary movement of the drum 1. Thus, each shaft is mounted with a narrowed end portion or journal 29 in a bearing 30 provided on the outside of the drum wall 13. At its free end, the journal 29 is non-rotatably connected to a toothed wheel 31 meshing with one of two annular gear rims or gear sections 32, 33 of a ring gear generally designated 34, which is mounted in a bearing 35 relative to the drum 1. More specifically, the gear rim 32 is an internal gear rim, while the gear rim 33 is located on the outside of the ring gear 34 (composed of two halves 34', 34'' joined together by screws or the like 36). The external gear rim 33 of the ring gear 34 meshes with a second toothed wheel 37 mounted on a rotatable shaft 38 of a second drive unit 39, for instance a hydraulic motor with a built-in slip clutch. This drive motor 39 (fixedly mounted on the stand 2 in a suitable place) serves, in a normal state of operation, to maintain the ring gear 34 in a stationary state in which the shafts 8 are automatically driven by the rotation of the drum. In this normal state of operation, the drum is assumed to rotate at a speed of 10-20 rpm, the rotation of the drum being brought about by the motor 27. Since the toothed wheel 31 of the journals 29 mesh with the stationary ring gear 34 and accompany the drum 1 during its rotation, the shafts will of course be caused to rotate in known manner, more specifically at a speed which considerably exceeds the speed of the drum. In practice, the gear ratio of the shafts 8 to the drum 1 may be 4-8:1, suitably 6:1 (thus, if the drum rotates at about 20 rpm, the shafts will rotate at 120 rpm). However, if the ring gear 34 is now caused to rotate in one of two opposite directions of rotation by actuation of the motor 39, the speed of rotation of the shafts 8 can be either increased or decreased depending on the selected direction of rotation of the ring gear 34, more specifically in such a manner that the speed of rotation of the shafts is increased if the ring gear 34 is rotated in a direction contrary to that of the drum 1, and vice versa. By causing the ring gear 34 to rotate in the same direction of rotation as the drum 1 and at a higher speed than the drum, it is even possible to reverse the direction of rotation of the shafts 8, which, in practice, is most valuable because it makes it possible to remove extremely resistant components from the goods that may get stuck in the gaps between the circumferential surfaces of the screw shafts 8 and the edge portions of the openings for the shafts. If the motor 39 is designed with a slip clutch, as is preferred in practice, objects from the flow of goods can be allowed to get stuck in the manner described above without causing any damage since the toothed wheel 31, in the event of an unintentional standstill, will then only entrain the ring gear 34, abolishing the resistance to rotation of the ring gear exerted by the slip clutch in the motor 39.

Further, by the power transmission shown in Fig. 4, it becomes possible to readily vary the speed of rotation of the processing shafts 8, such that the processing and feeding action thereof can be modified according to different types of goods to be sorted.

As appears from Fig. 1, the stand 2 is provided at one end, in this case the rear end, with means 40 for raising and lowering the end of the stand. The lifting means 40 may consist e.g. of arms articulated to the stand and pivotable relative to it by means of hydraulic cylinders 41, the free ends of the arms being provided with wheels 42. By means of these arms, it is possible to vary the inclination of the drum 1 relative to the structure or surface supporting the machine, in order to modify the feed rate of the goods through the drum. Thus, if the rear end of the drum 1 is raised by means of the arms 40, the feed rate will be decreased, bringing about a more intense processing of the goods by means of the screw shafts 8. Similarly, the feed rate of the goods will of course be increased if the rear end of the drum is lowered.

Fig. 5 shows how two processing shafts 8, 8' aligned with each other at two succeeding stations, e.g. stations 5 and 6, can be connected to each other by the intermediary of a jaw clutch 43 including male and female means provided on journals 44, 44' mounted in bearings 45 disposed on the outside of the drum wall 13. In this context, it should also be pointed out that the inventive machine can be made up of separate drum sections. In this case, a desired number of such sections are connected to each other, each section forming one processing station. These drum sections may be either rigidly connected to each other or rotatable in relation to each other and each comprise one or more processing stations. In this context, the essential thing merely is that there are provided between the inlet and the outlet of the assembled drum (or casing), two or more stations with processing means of gradually increasing size.

## Claims

1. Machine for processing goods, especially refuse, with a view to sorting said goods, comprising at least one rotatable, horizontal drum (1) having two or more processing stations (5, 6, 7) provided in succession between an inlet (3) and an outlet (4) at opposite ends of said drum, each of said processing stations comprising one or suitably more rotatable shafts or shaft-like elements (8) whose circumferential surfaces are equipped with projecting goods-processing means (9, 10) and which are mounted at openings (12) in the drum wall (13), more specifically with the centre axes of the shafts located outside the drum and with said processing means projecting into the drum through said openings, said processing means being adapted to cooperate with the edge portions of the drum wall defining said openings, for exerting a cutting, shearing or clipping action on goods fed through the drum from said inlet towards said outlet, for instance by said processing means, **characterised** in that said processing means (9, 10) of the shafts (8), in a first station (5) located closest to said inlet (3), have smaller dimensions than the corresponding processing means in the succeeding station (6) or stations (6,7) in order, in said first station, to remove fine goods while allowing coarser goods, during the feed of the goods from said inlet towards said outlet along the bottom of the drum, to pass on for removal in the succeeding station or stations (6, 7).

2. Machine as claimed in claim 1, intended for sorting domestic waste and containing at least three processing stations (5, 6, 7), **characterised** in that the height of the processing means at the first station (5) is 8-12 mm, preferably about 10 mm, that the height of the processing means at the second station (6) is 15-35 mm, suitably 20-30 mm and preferably about 25 mm, and that the height of the processing means at the third station (7) is 20-40 mm, suitably 25-35 mm and preferably about 30 mm.

3. Machine as claimed in claim 1 or 2, **characterised** in that each shaft (8) has a processing means which in known manner consists of a ridge or thread (9) helically extending along the circumferential surface of the shaft.

4. Machine as claimed in claim 3, **characterised** in that the shaft (8), in addition to a first thread (9), comprises a second thread (10) extending in a direction of thread opposite to that of said first thread.

5. Machine as claimed in any one of the preceding claims, **characterised** in that the drum (1) is provided on its inside with a coating (21) having electrostatic properties and serving to attract to its surface components, such as plastic bags, from the goods by the action of static electricity, and that means (22) are provided in the area of the top portion of the interior of the drum, for removing said components from the drum wall and conveying them in a flow of goods which is restricted to the top portion of the drum and separated from the main flow of goods (15) advancing on the bottom of the drum.

6. Machine as claimed in claim 5, **characterised** in that said means comprise fan means (22) disposed at the inlet of the drum and serving, in the top portion of the drum, to blow a stream of air directed towards the outlet of the drum and removing said components from the inside of the drum and conveying them to a collecting device (23) disposed at said outlet.

7. Machine as claimed in any one of the preceding claims, **characterised** in that a frame (2) carrying said drum (1) has means (40) for variably adjusting the inclination of the drum to permit varying the feed rate of the goods (15) to be sorted, through the drum.

8. Machine as claimed in any one of the preceding claims, **characterised** in that each shaft (8) is rotatable relative to the drum (1) in that a first toothed wheel (31) non-rotatably connected to the shaft meshes with one (32) of two annular gear rims or gear sections (32, 33) of a ring gear (34) which is mounted in a bearing relative to the drum and the other gear rim or gear section (33) of which meshes with a second toothed wheel (37) connected to a drive unit (39), for instance a hydraulic motor, which is provided with brake means and capable, when in a normal state, of holding the ring gear (34) stationary while causing each shaft (8) to rotate at a given speed exceeding the speed at which the drum (1) is rotated by means of a separate power source (27), and which is adapted, if desired, to impart a rotary movement to said ring gear (34) in one or the other of two opposite directions of rotation in order to either increase the speed of rotation of the shaft (8) or reduce it, optionally to such an extent that the direction of rotation of the shaft (8) is reversed.

## Patentansprüche

1. Maschine zum Verarbeiten von Waren, insbesondere von Abfall, mit dem Ziel, diese Waren zu sortieren, umfassend wenigstens eine drehbare horizontale Trommel (1), die zwei oder mehr Verarbeitungsstationen (5, 6, 7) aufweist, die in Aufeinanderfolge zwischen einem Einlaß (3) und einem Auslaß (4) an gegenüberliegenden Enden der Trommel vorgesehen sind, wobei jede der Verarbeitungsstationen eine oder geeigneterweise mehrere drehbare Wellen oder wellenartige Elemente (8) umfaßt, deren Umfangsoberflächen mit vorstehenden Warenverarbeitungseinrichtungen (9, 10) ausgestattet sind, und die an Öffnungen (12) in der Trommelwandung (13) angebracht sind, wobei die Mittenachsen der Wellen speziell außerhalb der Trommel angeordnet sind, und wobei die Verarbeitungseinrichtungen durch die Öffnungen in die Trommel hineinragen, wobei die Verarbeitungseinrichtungen dazu ausgelegt sind, mit den Kantenbereichen der Trommelwandung zusammenzuwirken, die die Öffnungen bilden, um auf die Waren, die durch die Trommel vom Einlaß zum Auslaß, beispielsweise durch die Verarbeitungseinrichtungen gefördert werden, eine Schneid-, Scher- oder Stutzwirkung auszuüben,
dadurch **gekennzeichnet,**
daß die Verarbeitungseinrichtungen (9, 10) der Wellen (8) in einer ersten am nächsten zum Einlaß (3) angeordneten Station (5) kleinere Abmessungen haben als die entsprechenden Verarbeitungseinrichtungen in der nachfolgenden Station (6) oder den nachfolgenden Stationen (6, 7), um in der ersten Station feine Waren zu entfernen, während grobere Waren während des Transports der Waren vom Einlaß zum Auslaß entlang dem Boden der Trommel zur Entfernung in der darauffolgenden Station oder den Stationen (6, 7) durchgelassen werden.

2. Maschine nach Anspruch 1,
die dazu bestimmt ist, Hausmüll zu sortieren und wenigstens drei Verarbeitungsstationen (5, 6, 7) enthält,
dadurch **gekennzeichnet,**
daß die Höhe der Verarbeitungseinrichtungen an der ersten Station (5) 8 bis 12 mm, vorzugsweise etwa 10 mm beträgt, daß die Höhe der Verarbeitungseinrichtung an der zweiten Station (6) 15 bis 35 mm, geeigneterweise 20 bis 30 mm und vorzugsweise etwa 25 mm beträgt, und daß die Höhe der Verarbeitungseinrichtungen an der dritten Station (7) 20 bis 40 mm, geeigneterweise 25 bis 35 mm und vorzugsweise etwa 30 mm beträgt.

3. Maschine nach Anspruch 1 oder 2,
dadurch **gekennzeichnet,**
daß jede Welle (8) eine Verarbeitungseinrichtung aufweist, die in bekannter Weise aus einer Rippe oder einem Gewindegang (9) besteht, die bzw. der sich längs der Umfangsoberfläche der Welle spiralförmig erstreckt.

4. Maschine nach Anspruch 3,
dadurch **gekennzeichnet,**
daß die Welle (8) zusätzlich zu einem ersten Gewindegang (9) einen zweiten Gewindegang (10) umfaßt, der sich in einer Gewindegangrichtung entgegengesetzt zu derjenigen des ersten Gewindegangs erstreckt.

5. Maschine nach einem der vorangehenden Ansprüche,
dadurch **gekennzeichnet,**
daß die Trommel (1) en ihrer Innenseite mit einem Überzug (21) versehen ist, der elektrostatische Eigenschaften hat und dazu dient, an seine Oberfläche Bestandteile, wie beispielsweise Plastiksäcke aus den Waren durch die Wirkung statischer Elektrizität anzuziehen, und daß Einrichtungen (22) in dem Bereich des Kopfbereichs des Inneren der Trommel vorgesehen sind, um diese Bestandteile von der Trommelwandung zu entfernen und in einem Warenfluß zu überführen, der auf den Kopfbereich der Trommel beschränkt und vom Hauptfluß der Waren (15) getrennt ist, die sich am Boden der Trommel vorwärts bewegen.

6. Maschine nach Anspruch 5,
dadurch **gekennzeichnet,**
daß die Einrichtung eine Ventilatoreinrichtung (22) umfaßt, die am Einlaß der Trommel angeordnet ist und dazu dient, in dem Kopfbereich der Trommel einen Luftstrom zu blasen, der auf den Auslaß der Trommel zu gerichtet ist und die Bestandteile von der Innenseite der Trommel entfernt und sie zu einer Sammelvorrichtung (23) überführt, die am Auslaß angeordnet ist.

7. Maschine nach einem der vorhergehenden Ansprüche,
dadurch **gekennzeichnet,**
daß ein Rahmen (2), der die Trommel (1) trägt, Einrichtungen (40) zum variablen Einstellen der Neigung der Trommel aufweist, um die Transportrate der zu sortierenden Waren (15) durch die Trommel zu verändern.

8. Maschine nach einem der vorhergehenden Ansprüche,
dadurch **gekennzeichnet,**
daß jede Welle (8) relativ zu der Trommel (1) drehbar ist, dadurch, daß ein erstes mit Zähnen versehenes Rad (31), das mit der Welle drehfest verbunden ist, mit einem ersten (32) von zwei ringförmigen Zahnkränzen oder Zahnbereichen (32, 33) eines Ringzahnrads (34) kämmt, das in einem Lager relativ zu der Trommel angebracht ist, und dessen anderer Zahnkranz oder Zahnbereich (33) mit einem zweiten mit Zähnen versehenen Rad (37) kämmt, das an eine Antriebseinheit (39), beispielsweise einen Hydraulikmotor angeschlossen ist, die bzw. der mit Bremsmitteln versehen und dazu in der Lage ist, dann, wenn er sich in einer Normalbetriebsart befindet, das Ringzahnrad (34) stationär zu halten, während er jede Welle (8) dazu veranlaßt, mit einer gegebenen Drehzahl sich zu drehen, welche die Drehzahl übertrifft, mit der die Trommel (1) mittels einer getrennten Kraftquelle (27) in Drehung versetzt wird, und die bzw. der, falls gewünscht, dazu ausgelegt ist, das Ringzahnrad (34) in eine Drehbewegung in die eine oder die andere von zwei entgegengesetzten Drehrichtungen zu versetzen, um die Drehzahl der Welle (8) wahlfrei entweder auf eine solche Höhe zu erhöhen oder zu vermindern, daß die Drehrichtung der Welle (8) umgekehrt wird.

## Revendications

1. Machine de traitement de marchandises, en particulier de déchets, en vue de leur triage, comprenant au moins un tambour horizontal rotatif (1) ayant deux ou plusieurs stations de traitement (5, 6, 7) se succédant entre une entrée (3) et une sortie (4) prévues aux extrémités opposées dudit tambour, chacune desdites stations de traitement comportant un ou convenablement plusieurs arbres rotatifs ou éléments semblables (8) dont les surfaces circonférentielles sont munies de moyens de traitement de marchandises (9, 10) faisant saillie et étant montés à des ouvertures (12) pratiquées dans la paroi (13) de tambour, les axes des arbres étant plus précisément situés hors du tambour et lesdits moyens de traitement faisant saillie dans le tambour à travers lesdites ouvertures, les moyens de traitement étant conçus pour coopérer avec les parties de bord de la paroi de tambour définissant lesdites ouvertures, afin de couper, de cisailler ou de tailler les marchandises amenées à travers le tambour depuis ladite entrée vers ladite sortie, par exemple par lesdits moyens de traitement, **caractérisée** en ce que les moyens de traitement (9, 10) des arbres (8) ont, dans une première station (5) la plus proche de l'entrée (3), des dimensions plus faibles que les moyens de traitement correspondants de la station (6) suivante ou des stations (6, 7) suivantes, afin d'enlever dans la première station des marchandises fines, en permettant aux marchandises plus grosses d'en passer, au cours de l'acheminement des marchandises de l'entrée vers la sortie le long du fond du tambour, pour être enlevées dans la station suivante ou les stations (6, 7) suivantes.

2. Machine selon la revendication 1, conçue pour trier de l'ordure ménagère et comprenant au moins trois stations de traitement (5, 6, 7), **caractérisée** en ce que les moyens de traitement de la première station (5) sont d'une hauteur de 8-12 mm, de préférence d'environ 10 mm, en ce que les moyens de traitement de la deuxième station (6) sont d'une hauteur de 15-35 mm, convenablement de 20-30 mm et de préférence d'environ 25 mm, et en ce que les moyens de traitement de la troisième station (7) sont d'une hauteur de 20-40 mm, convenablement de 25-35 mm et de préférence d'environ 30 mm.

3. Machine selon la revendication 1 ou 2, **caractérisée** en ce que chaque arbre (8) est muni d'un moyen de traitement qui est constitué de manière connue par une nervure ou un filet (9) hélicoidal s'étendant le long de la surface circonférentielle de l'arbre.

4. Machine selon la revendication 3, **caractérisée** en ce que l'arbre (8) comprend, outre un premier filet (9), un second filet (10) s'étendant dans un sens de l'hélice opposé à celui du premier filet.

5. Machine selon l'une quelconque des revendications précédentes, **caractérisée** en ce que le tambour (1) est muni à sa face intérieure d'une couche (21) ayant des propriétés électrostatiques et servant à attirer à sa surface des objets, tels que des sacs en plastique, à partir des marchandises sous l'action de l'éléctricité statique, et en ce que des moyens (22) sont prévus dans la région de la partie supérieure de l'intérieur du tambour afin d'enlever lesdits objects de la paroi de tambour et de les acheminer en un écoulement de marchandises limité à la partie supérieure du tambour et séparé de l'écoulement principal de marchandises (15) progressant sur le fond du tambour.

6. Machine selon la revendication 5, **caractérisée** en ce que lesdits moyens comportent des moyens à ventilateur (22) prévus à l'entrée du tambour et servant, dans la partie supérieure du tambour, à souffler un courant d'air vers la sortie du tambour, enlevant ainsi lesdits objects de la face intérieure du tambour and les acheminant à un dispositif collecteur (23) prévu à ladite sortie.

7. Machine selon l'une quelconque des revendications précédentes, **caractérisée** en ce qu'un cadre (2) portant ledit tambour (1) possède des moyens (40) de réglage variable de l'inclinaison du tambour afin de permettre de varier la vitesse d'avance à travers le tambour des marchandises (15) à trier.

8. Machine selon l'une quelconque des revendications précédentes, **caractérisée** en ce que chaque arbre (8) est rotatif par rapport au tambour (1) par l'intermédiaire d'une première roue dentée (31) qui est solidaire en rotation de l'arbre et qui s'engrène avec une (32) de deux couronnes dentées ou sections dentées annulaires (32, 33) d'un engrenage à couronne (34) qui est monté dans un palier par rapport au tambour et dont l'autre couronne dentée ou section dentée (33) s'engrène avec une seconde roue dentée (37) reliée à un organe moteur (39), par exemple un moteur hydraulique, qui est muni de moyens de freinage et capable en état normal de maintenir stationnaire l'engrenage à couronne (34) tout en faisant tourner chaque arbre (8) à une vitesse donnée supérieure à la vitesse à laquelle le tambour (1) est tourné par une source d'énergie (27) séparée, et qui est conçu, si besoin est, pour imprimer un mouvement rotatif audit engrenage à couronne (34) dans l'un ou l'autre de deux sens de rotation opposés, soit pour augmenter la vitesse de rotation de l'arbre (8), soit pour la réduire, facultativement à tel point que le sens de rotation de l'arbre (8) est renversé.
